# EUROPEAN PATENT APPLICATION

(11) **EP 4 804 258 A1**
(43) Date of publication of application: **09.09.2026**
(21) Application number: 24894572.7
(22) Date of filing: 19.11.2024
(51) Int. Cl.: H01M 4/62, H01M 4/13, H01M 4/139, H01M 10/0525, C08F 283/01, C08F 220/06, C08F 220/44

(54) **BINDER COMPOSITION FOR MANUFACTURING ELECTRODE, ELECTRODE MATERIAL LAYER COMPOSITION FOR DRY PROCESS COMPRISING BINDER COMPOSITION, AND SECONDARY BATTERY COMPRISING SAME**

(30) Priority: 22.11.2023 KR 20230163666
(71) Applicant: CNP Solutions Co., Ltd., Seoul 02841 (KR)
(72) Inventor: KIM, Jong Eun, Seoul 03620 (KR); SUH, Kwang Suck, Yongin-si, Gyeonggi-do 16806 (KR); SUH, Min Won, Daejeon 34050 (KR); PARK, Jong Ho, Gongju-si, Chungcheongnam-do 32594 (KR)
(74) Representative: Beck & Rössig European Patent Attorneys
(86) International application number: PCT/KR2024/018285
(87) International publication number: WO 2025/110680

(57) **Abstract**

The present invention relates to an electrode material layer composition for a secondary battery and a secondary battery comprising the same, and more particularly, to a binder composition having a novel composition that comprises a ternary copolymer and is capable of improving adhesion between an electrode and a metal current collector, as well as binding strength among respective components within the electrode, regardless of whether it is applied in a wet process or a dry process, while stably maintaining electrical conductivity and thereby providing excellent electrochemical properties; and to an electrode material layer composition for a dry process comprising the binder composition, and a secondary battery comprising the same.

## Description

### Technical Field

The present invention is supported by the following national research and development projects.
[Unique Project ID] 1415187718
[Project Number] 20023145
[Relevant Ministry] Ministry of Trade, Industry and Energy
[Project Management (Specialized) Agency] Korea Evaluation Institute of Industrial Technology
[Research Project] Materials and Parts Technology Development Program
[Title of the Research Project] Development of binder and manufacturing process for secondary battery carbon reduction dry process

The present invention relates to an electrode material layer composition for a secondary battery and a secondary battery comprising the same, and more particularly, to a binder composition having a novel composition that comprises a ternary copolymer and is capable of improving adhesion between an electrode and a metal current collector, as well as binding strength among respective components within the electrode, regardless of whether it is applied in a wet process or a dry process, while stably maintaining electrical conductivity and thereby providing excellent electrochemical properties; and to an electrode material layer composition for a dry process comprising the binder composition, and a secondary battery comprising the same.

### Background Art

Hereinafter, the present invention will be described with reference to a lithium-ion battery. However, it will be apparent that the scope of the present invention is not limited to lithium-ion batteries and may be applied to all types of secondary batteries.

A lithium-ion battery is generally manufactured by forming an active material layer on a metal foil (electrode current collector), such as aluminum or copper, by mixing a positive electrode active material comprising lithium-containing compound particles and a negative electrode active material typically represented by graphite with a binder, followed by impregnating the same with an electrolyte, and laminating the resulting structure with a separator (so-called "separator") interposed therebetween. During operation, lithium ions repeatedly undergo insertion into and extraction from the positive and negative electrode layers (lithiation and delithiation). When different types of ions are employed, a secondary battery operable with such ions may be fabricated by using suitable materials corresponding to the ions, such as appropriate positive electrode active materials, negative electrode active materials, and, if necessary, electrolytes.

A conventional technique for manufacturing an electrode plate is a so-called wet process, in which an electrode composition slurry is prepared by dispersing an active material, a binder, and other additives such as a conductive material in a solvent, such as N-methyl-2-pyrrolidone (NMP) or water, followed by coating the slurry onto a metal current collector to a predetermined thickness and drying the same to form an active material electrode plate. This wet process requires an additional step of completely removing the solvent and recovering the evaporated solvent during the manufacturing process. Accordingly, the wet process is an expensive process that requires a large amount of energy for solvent evaporation and recovery. In contrast, a recently emerging dry process is a technique in which an electrode composition is prepared by dry-mixing an active material, a binder, and other additives without the use of a solvent, and directly forming the same on a current collector to a predetermined thickness to manufacture an electrode plate without a solvent. In the dry process, although high-speed mixing or mixing methods involving the application of heat and pressure may be used to uniformly mix the active material with the binder and other additives, the process is environmentally friendly because it does not require a separate step for solvent removal and recovery.

In order to prepare an electrode composition, an electrode layer must be formed on a metal current collector, wherein a material that imparts adhesion between active material particles and/or between the electrode layer and the current collector is a binder. The binder should not only bind the active material and conductive material but also should not impede the movement of lithium ions between the positive electrode active material (for example, lithium-nickel-cobalt-manganese (NCM)) and the negative electrode active material (for example, graphite or silicon). In order to facilitate lithium-ion transport through the binder, it is advantageous to use a binder having good ionic conductivity. Currently used binders include, in the case of a wet process, polyvinylidene fluoride (PVDF) for a positive electrode and a mixture of carboxymethyl cellulose/styrene-butadiene rubber (CMC/SBR) for a negative electrode. However, such binders may be limited in improving binding strength between active materials or adhesion to the current collector, or in increasing ionic conductivity, because they are primarily effective in either binding performance or do not contain ionic conductive components. In addition, a binder mainly used in the dry process is a fluorine-based resin referred to as polytetrafluoroethylene (PTFE). When an electrode composition is prepared using such a binder and an electrode layer sheet is manufactured therefrom through calendering, a high pressure is required, and it is difficult to form a relatively thin electrode layer having a thickness of less than about 100 µm. Furthermore, fluorine-based resins are known to have relatively poor adhesion properties. In such cases, although an electrode layer may be formed under high pressure, repeated expansion and contraction during charge/discharge cycles of the battery may deteriorate adhesion among the respective components, ultimately leading to degradation of electrochemical performance.

Accordingly, there is a need for the development of a novel binder capable of improving binding strength among constituent components such as an active material and a conductive material, as well as adhesion to a current collector, while exhibiting excellent electrochemical properties when an electrode material layer for a secondary battery is manufactured via a dry process.

### Disclosure

### Technical Problem

Therefore,an object of the present invention is to provide a binder composition for electrode fabrication that comprises a ternary copolymer and is capable of improving binding strength among respective components within an electrode, regardless of whether it is applied in a wet process or a dry process, while exhibiting flexibility, excellent adhesion to a metal current collector, and not impeding the movement of lithium ions, thereby providing excellent electrochemical properties; and to provide an electrode material layer composition for a dry process comprising the binder composition.

Another object of the present invention is to provide an electrode for a secondary battery that enables miniaturization, since a thinner positive electrode material layer or negative electrode material layer can be manufactured by using the binder composition for electrode fabrication.

Still another object of the present invention is to provide various types of secondary batteries, including a lithium-ion battery, which comprise an electrode manufactured from the electrode material layer composition for a dry process, and which are environmentally friendly and economically advantageous by eliminating complex processes required for removing and recovering a solvent.

The objects of the present invention are not limited to the foregoing, and other objects not specifically mentioned herein will be clearly understood by those skilled in the art from the following description.

### Technical Solution

To achieve the above-described objects of the present invention, the present invention first provides a binder composition for electrode fabrication comprising a ternary copolymer composed of a glycol-based compound, a maleic acid-based compound, and a third monomer.

In a preferred embodiment, the third monomer is a compound having a main chain including a vinyl group (CH₂=CH-) and having another functional group attached thereto.

In a preferred embodiment, the compound is at least one selected from the group consisting of an acrylic-based compound, an acrylonitrile-based compound, an ethylene-based compound, an imidazole-based compound, an imidazolium-based compound, a propylene-based compound, and a vinylidene-based compound.

In a preferred embodiment, the third monomer is an acrylic-based compound represented by the following Chemical Formula 1:

[Chemical Formula 1] CH₂=CH-COO-R

wherein R is any one selected from -H, an alkyl group, an alkenyl group, an alkynyl group, a phenyl group, and an amino group.

In a preferred embodiment, in the ternary copolymer, the glycol-based compound and the maleic acid-based compound are included at a molar ratio of 99:1 to 1:99, and the glycol-based compound and the maleic acid-based compound relative to the third monomer are included at a weight ratio of 99:1 to 1:99.

In a preferred embodiment, the glycol-based compound is a compound having a main chain composed of ethylene glycol (HO-(CH₂-CH₂-O)ₙ-H) or ethylene oxide (-(CH₂-CH₂-O)ₙ-), wherein n is a natural number greater than 0, and the maleic acid-based compound is a compound including a five-membered ring structure having two carboxyl groups.

In a preferred embodiment, the glycol-based compound is at least one selected from the group consisting of ethylene glycol, ethylene oxide, propylene glycol, and propylene oxide, and the maleic acid-based compound is at least one selected from the group consisting of maleic acid, salts thereof, and anhydrides thereof.

In a preferred embodiment, the ternary copolymer is ethylene glycol-maleic acid-acrylonitrile or ethylene glycol-maleic acid-acrylic acid.

In a preferred embodiment, the ternary copolymer has a number average molecular weight of 10,000 to 1,000,000 g/mol.

In a preferred embodiment, the binder composition further comprises one or more additional binders, wherein the ternary copolymer and the binder are included at a weight ratio of 90:10 to 10:90.

In a preferred embodiment, the binder is at least one selected from the group consisting of carboxymethyl cellulose (CMC), polyvinylidene fluoride (PVDF), polytetrafluoroethylene (PTFE), and polyacrylic acid (PAA).

Further, the present invention provides an electrode material layer composition for a dry process comprising: a positive electrode or negative electrode active material; the binder composition according to any one of the above-mentioned binder composition for electrode fabrication; and a conductive material.

In a preferred embodiment, the composition comprises 85 to 99.4 wt% of the positive or negative electrode active material, 0.5 to 10 wt% of the binder composition, and 0.1 to 5 wt% of the conductive material.

In a preferred embodiment, the conductive material is at least one selected from the group consisting of conductive carbon black, graphene, single-walled carbon nanotubes (SWCNTs), double-walled carbon nanotubes (DWCNTs), multi-walled carbon nanotubes (MWCNTs), branched carbon nanotubes, carbon nanoplates, and carbon nanoribbons.

In a preferred embodiment, the composition further comprises an acrylate-based compound that is liquid at room temperature and is capable of post-curing, and a curing agent therefor.

In a preferred embodiment, the acrylate-based compound is a monomer or oligomer having 2 to 16 functional groups and a main chain composed of 2 to 1,000 carbon atoms.

In a preferred embodiment, the functional group is at least one selected from the group consisting of methylene, urethane, ester, ether, oxide, ethylene oxide, propylene oxide, ethylene glycol, propylene glycol, butadiene, imide, amine, amide, epoxy, olefin, sulfone groups, and combinations thereof.

In a preferred embodiment, the acrylate-based compound is included in an amount of 0.1 to 10 parts by weight based on 100 parts by weight of the positive or negative electrode active material.

In a preferred embodiment, the curing agent is at least one selected from a thermal curing agent and a photo-curing agent, and is included in an amount of 0.1 to 20 parts by weight based on 100 parts by weight of the acrylate-based compound.

In a preferred embodiment, the thermal curing agent includes a peroxide or an azo compound, and the photo-curing agent includes a phenyl ketone-based compound or a phosphine oxide-based compound.

In a preferred embodiment, the positive or negative electrode active material comprises at least one selected from the group consisting of lithium, manganese, nickel, cobalt, aluminum, iron, phosphorus, tin, titanium, carbon materials, silicon, silicon oxide, sulfur, and combinations thereof.

Further, the present invention provides a primer layer composition comprising 0.05 to 300 parts by weight of a nanocarbon material and a solvent based on 100 parts by weight of the binder composition according to any one of the above-mentioned binder composition for electrode fabrication, wherein a solid content is 0.2 to 40 wt%.

In a preferred embodiment, the nanocarbon material is at least one selected from the group consisting of conductive carbon black, graphene, single-walled carbon nanotubes, double-walled carbon nanotubes, multi-walled carbon nanotubes, branched carbon nanotubes, carbon nanoplates, and carbon nanoribbons.

Further, the present invention provides an electrode for a secondary battery comprising a positive electrode material layer or a negative electrode material layer formed from the above-mentioned electrode material layer composition for a dry process.

Further, the present invention provides a method for manufacturing an electrode for a secondary battery, the method comprising: a composition preparing step of preparing the above-mentioned electrode material layer composition for a dry process; a sheet forming step of forming a positive electrode material layer sheet or a negative electrode material layer sheet from the composition; an attaching step of attaching the sheet to a metal current collector; a curing step of curing the attached sheet; and a rolling step of calendering the electrode obtained after the curing step.

In a preferred embodiment, the attaching step comprises: forming a primer layer on the metal current collector; and placing the positive electrode material layer sheet or the negative electrode material layer sheet on the primer layer and pressing the same.

In a preferred embodiment, the curing step is performed by at least one of thermal curing at 50°C to 180°C for 5 to 30 minutes and photo-curing via irradiation.

Further, the present invention provides a lithium-ion battery comprising the electrode for a secondary battery according to any one of the foregoing embodiments.

Further, the present invention provides a lithium-ion battery comprising the electrode for a secondary battery manufactured by the above-described method.

### Advantageous Effects

According to the present invention, since the binder composition for electrode fabrication and the electrode material layer composition comprising the same include a ternary copolymer, binding strength among components within an electrode can be improved regardless of whether they are applied in a wet process or a dry process, and the composition exhibits flexibility and excellent adhesion to a metal current collector, while not impeding the movement of lithium ions, thereby stably maintaining electrical conductivity and providing excellent electrochemical properties.

In addition, according to the secondary battery of the present invention, since an electrode manufactured by a dry process is employed, complex processes required for removing and recovering a solvent can be eliminated, thereby providing excellent environmental friendliness and economic efficiency.

Accordingly, the secondary battery of the present invention has an advantage in that electrochemical properties, such as electrical capacity and charge-discharge cycle characteristics, can be stably maintained.

The effects of the present invention are not limited to those described above, and other effects not specifically mentioned herein will be clearly understood by those skilled in the art from the following description.

### Description of Drawings

FIGS. 1A and 1B are exemplary chemical structural formulas of an ethylene glycol-maleic acid-acrylic acid copolymer and an ethylene glycol-maleic acid-acrylonitrile copolymer, respectively, which are ternary copolymers prepared in Examples 1 and 2 of the present invention.
FIG. 2 is a photograph of a product obtained from the copolymer of Example 2 of the present invention.
FIG. 3 shows results of a charge-discharge cycle test of a positive electrode prepared by a wet process according to Example 5 of the present invention.
FIG. 4 shows results of a charge-discharge cycle test of a negative electrode prepared by a wet process according to Example 6 of the present invention.
FIG. 5 shows results of a charge-discharge cycle test of Positive Electrode 1 prepared by a dry process according to Example 7 of the present invention.
FIG. 6 shows results of a charge-discharge cycle test of Positive Electrode 2 prepared by a dry process according to Example 9 of the present invention.
FIG. 7 shows results of a charge-discharge cycle test of Comparative Positive Electrode 2 prepared by a dry process according to Comparative Example 2 of the present invention.
FIG. 8 shows results of a charge-discharge cycle test of Positive Electrode 4 prepared by a dry process according to Example 11 of the present invention.

### Mode for Invention

The terminology used herein is selected from terms that are currently widely used as much as possible while taking into account the functions of the present invention. However, such terminology may vary depending on the intention of those skilled in the art, judicial precedents, or the emergence of new technologies. In certain cases, terms arbitrarily selected by the applicant may also be used, and in such cases, their meanings will be described in detail in the relevant portions of the description.

As used herein, the terms "comprise," "have," and "be composed of," unless expressly stated otherwise using terms such as "only," are intended to allow for the inclusion of additional elements. Further, unless explicitly stated otherwise, singular expressions include plural forms.

In interpreting the constituent elements, unless otherwise explicitly stated, they should be construed as including a margin of error.

Characteristic features of the various embodiments of the present invention may be partially or entirely combined or integrated with each other, and various technical interoperations and driving relationships are possible. Each embodiment may be implemented independently or in combination with other embodiments.

Hereinafter, the technical configuration of the present invention will be described in detail with reference to the accompanying drawings and preferred embodiments.

However, the present invention is not limited to the embodiments described herein and may be embodied in various other forms. Throughout the specification, like reference numerals denote like elements.

A technical feature of the present invention is to provide a novel use of a ternary copolymer prepared by synthesizing a glycol-based compound and a maleic acid-based compound, or a composite thereof formed by chemically bonding these compounds, with a third monomer. The ternary copolymer can be used not only as a binder for a dry process but also for a wet process, and provides flexibility, improved binding strength among respective components within an electrode, excellent adhesion to a metal current collector, and does not impede the movement of lithium ions, thereby exhibiting excellent electrochemical properties. Accordingly, the present invention relates to a binder composition for electrode fabrication comprising such a ternary copolymer, an electrode material layer composition for a dry process comprising the same, and a primer layer composition. In addition, the present invention relates to an electrode for a secondary battery that enables miniaturization by forming a thinner electrode layer using the electrode material layer composition for a dry process, and to a secondary battery manufactured therefrom in which electrochemical properties, such as electrical capacity and charge-discharge cycle characteristics, can be stably maintained.

As described above, since the present invention is technically characterized by a binder composition having a novel composition that binds active materials and conductive additives, which are constituent elements of a secondary battery, and adheres an electrode layer (or electrode composition layer) formed therefrom onto a metal current collector, the binder composition for electrode fabrication according to the present invention is not limited to lithium-ion batteries but may be applied to all types of secondary batteries including a negative electrode and/or a positive electrode comprising an active material, a conductive additive, and the binder composition. Hereinafter, the present invention will be mainly described with reference to lithium-ion batteries. In addition, although the description will be primarily made with respect to a positive electrode, it will be apparent that the present invention is applicable in common to both positive and negative electrode active materials regardless of the type of active material.

Accordingly, the present invention provides a binder composition for electrode fabrication for a dry process comprising a ternary copolymer composed of a glycol-based compound, a maleic acid-based compound, and a third monomer.

The glycol-based compound is a component introduced to facilitate the movement of lithium ions within a battery or at least not to impede such movement, as an ionically conductive compound, and may be a compound including, as a main chain, ethylene glycol (HO-(CH₂-CH₂-O)ₙ-H) or ethylene oxide (-(CH₂-CH₂-O)ₙ-), wherein n is a natural number greater than 0. These two compounds fundamentally have the same chemical structure, and are generally referred to as ethylene glycol (EG) when the molecular weight is 20,000 g/mol or less, and as ethylene oxide (EO) when it exceeds 20,000 g/mol. Accordingly, in the present invention, these are collectively referred to as glycol-based compounds. In one embodiment, the glycol-based compound may be a compound composed of an olefin-based compound such as ethylene or propylene and oxygen, having a main chain with 2 to 1,000 carbon atoms, and may be at least one selected from the group consisting of ethylene glycol, ethylene oxide, propylene glycol, and propylene oxide.

The maleic acid-based compound is a component used to increase adhesion between a metal current collector and an active material. For example, maleic anhydride is a compound including a so-called five-membered ring structure composed of carbon and oxygen atoms and having two carboxyl groups, and may be a compound capable of forming a copolymer by reacting with other compounds. In one embodiment, the maleic acid-based compound may be at least one selected from the group consisting of maleic acid, salts thereof, and anhydrides thereof.

If necessary, the glycol-based compound and the maleic acid-based compound may be reacted in advance through a chemical reaction using an organic acid-based initiator to prepare a copolymer (hereinafter, a glycol-maleic acid complex).

The third monomer is a compound constituting the ternary copolymer of the present invention through a copolymerization reaction with the above-described glycol-based compound and maleic acid-based compound or the glycol-maleic acid complex. The third monomer may be any monomer having a vinyl group (CH₂=CH-) in its main chain and having another functional group attached thereto, as long as it is capable of forming a copolymer via the vinyl group.

Representative compounds included in the third monomer include various types of compounds such as those having an acrylic group, a methacrylic group, an acrylonitrile group, imidazole, a vinylpyrrolidone group, an ethylene group, a propylene group, or a monomer having a double bond in a pendant group. Any one or more of these may be used.

In one embodiment, the third monomer may be at least one selected from the group consisting of an acrylic compound, an acrylonitrile-based compound, an ethylene-based compound, an imidazole-based compound, an imidazolium-based compound, a propylene-based compound, and a vinylidene-based compound.

In another embodiment, the third monomer may be at least one selected from the group consisting of an acrylic compound, imidazole, imidazolium, acrylate, methacrylate, acrylonitrile, pyrrolidone, ethylene, propylene, and monomers having a double bond in a pendant group. Accordingly, it will be apparent that specific synthesis methods may vary depending on the components.

Herein, the acrylic compound may be a compound represented by the following Chemical Formula 1:

[Chemical Formula 1] CH₂=CH-COO-R

wherein R is any one selected from -H, an alkyl group, an alkenyl group, an alkynyl group, a phenyl group, and an amino group.

Further, the acrylonitrile-based compound is a compound having a cyano (-CN) group attached to a vinyl (CH₂=CH-) backbone, and is typically acrylonitrile (CH₂=CH-CN).

Hereinafter, the ternary copolymer of the present invention will be mainly described with reference to cases in which an acrylic compound or an acrylonitrile-based compound is used as the third monomer. However, it will be apparent that the scope of the present invention is not limited thereto.

The ternary copolymer included in the binder composition for electrode fabrication of the present invention may be synthesized by the following two methods using the above-described compounds, i.e., the glycol-based compound, the maleic acid-based compound or the glycol-maleic acid complex, and the third monomer.

A first method is a one-step synthesis method, in which all components, including the glycol-based compound, the maleic acid-based compound, and the third monomer, are mixed in a solvent, and two initiators-namely, an initiator for forming the glycol-maleic acid complex and an initiator for a subsequent copolymerization reaction with the third monomer-are added separately, or a single initiator capable of participating in both reactions is added, followed by synthesis of the ternary copolymer and subsequent appropriate filtering and purification processes to obtain the final ternary copolymer.

A second method is a two-step synthesis method, in which the glycol-based compound and the maleic acid-based compound are first reacted using an initiator to form a glycol-maleic acid complex, and then the complex and the third monomer having a vinyl group are mixed in a solvent and reacted again with an initiator to synthesize the ternary copolymer.

In both of the above-described methods, during the synthesis reaction, the glycol-based compound and the maleic acid-based compound first react to form a glycol-maleic acid complex, which is then copolymerized with the third monomer to ultimately produce the ternary copolymer. Accordingly, in the one-step synthesis method, the combined weight of the initially charged glycol-based compound and maleic acid-based compound may be regarded as the weight of the glycol-maleic acid complex.

Therefore, in the ternary copolymer included in the binder composition for electrode fabrication of the present invention, it may be experimentally convenient to define the compositional ratios such that the ratio between the glycol-based compound and the maleic acid-based compound is expressed as a molar ratio, while the ratio between the glycol-maleic acid complex and the third monomer is expressed as a weight ratio.

As a result, in the ternary copolymer synthesized by the above-described methods, the glycol-based compound and the maleic acid-based compound may be included at a molar ratio of 99:1 to 1:99, and the glycol-based compound and the maleic acid-based compound relative to the third monomer may be included at a weight ratio of 99:1 to 1:99. More preferably, the glycol-based compound and the maleic acid-based compound are included at a molar ratio of 90:10 to 10:90, and the glycol-based compound and the maleic acid-based compound relative to the third monomer are included at a weight ratio of 90:10 to 10:90. If the ratio is outside the above ranges, the composition effectively corresponds to a single component, such that the characteristics of both components are not sufficiently exhibited, which is undesirable.

In addition, the ternary copolymer included in the binder composition for electrode fabrication of the present invention may be synthesized by various methods using the above-described compounds, i.e., the glycol-based compound and the maleic acid-based compound or the glycol-maleic acid complex, and the third monomer. For example, the glycol-maleic acid complex may be synthesized using an organic acid-based initiator such as acetic acid or p-toluenesulfonic acid. Further, the synthesis of the glycol-maleic acid complex with the third monomer, such as acrylonitrile or acrylic acid, may be carried out by various polymerization methods, including radical polymerization using a radical-generating compound such as 2,2'-azobisisobutyronitrile (AIBN) or a peroxide, or oxidative polymerization using ammonium persulfate. In addition, various other polymerization methods may be employed, including methods using a photoinitiator, ionic polymerization, redox polymerization using an oxidation-reduction reaction, or thermal polymerization, either individually or in combination, or by sequential use of initiators, to synthesize the ternary copolymer. Detailed reaction conditions for each polymerization method, such as reaction temperature, reaction time, and the amount of initiator, may be appropriately selected by those skilled in the art, for example, by carrying out the reaction at 60 to 120°C for 4 to 48 hours using various solvents such as dimethylformamide (DMF) or water, and therefore are not particularly limited in the present invention.

The ternary copolymer included in the binder composition for electrode fabrication of the present invention preferably has a number average molecular weight in the range of 10,000 to 1,000,000 g/mol. If the number average molecular weight is less than 10,000 g/mol, the molecular weight is too low, resulting in poor physical properties of the electrode layer, which is undesirable. If it exceeds 1,000,000 g/mol, it is difficult to obtain by conventional radical polymerization methods, and the excessively high molecular weight leads to high viscosity, making it difficult to mix with an active material and a conductive material, which is also undesirable.

In another embodiment, the binder composition for electrode fabrication of the present invention may further comprise an additional binder other than the ternary copolymer having the above-described composition, wherein the ternary copolymer and the additional binder may be included at a weight ratio of 90:10 to 10:90. In this case, the properties of the respective binders may complement each other to provide improved effects, which is advantageous. If the ratio exceeds the above upper or lower limits, the composition substantially behaves as a single binder rather than a mixed binder, and thus the advantages of using a mixed binder are diminished, which is undesirable.

Any known binder may be used as the additional binder. In one embodiment, one or more binders may include polyolefins, polyalkylenes, polyethers, styrene-butadiene rubber (SBR), polysiloxanes and copolymers thereof, branched polyethers, polyvinyl ethers, polyacrylic acid, polyvinyl carbonate, copolymers thereof, and/or mixtures thereof. In another embodiment, the binder may further include guar, alginic acid, poly[(isobutylene-alt-maleic acid, ammonium salt)-co-isobutylene-alt-maleic anhydride], poly(ethylene-alt-maleic anhydride), poly(methyl vinyl ether-alt-maleic anhydride), polyacrylonitrile (PAN), acrylonitrile-acrylic acid-maleic anhydride copolymers, acrylic acid-acrylonitrile copolymers, imidazole-based polymers and copolymers, poly(methyl methacrylate) (PMMA), poly(vinyl chloride) (PVC), and polyvinyl ethers. In some embodiments, the polyolefin may include polyethylene (PE), polypropylene (PP), polytetrafluoroethylene (PTFE), polyvinylidene fluoride (PVDF), copolymers thereof, and/or mixtures thereof. In another embodiment, one or more binders may include polyvinylidene chloride, poly(phenylene oxide) (PPO), polyethylene-block-poly(ethylene glycol), poly(ethylene oxide) (PEO), polydimethylsiloxane (PDMS), polydimethylsiloxane-co-alkylmethylsiloxane, copolymers thereof, and/or mixtures thereof. In certain embodiments, the fibrillatable binder is PTFE. One or more binders may include cellulose or derivatives thereof. The cellulose derivatives may include, for example, cellulose esters such as cellulose acetate; cellulose ethers such as methyl cellulose, ethyl cellulose, hydroxypropyl cellulose (HPC), hydroxypropyl methyl cellulose (HPMC), or hydroxyethyl cellulose (HEC); cellulose nitrate; cellulose chitosan, such as carboxymethyl cellulose chitosan; or carboxyalkyl cellulose, such as carboxymethyl cellulose (CMC), carboxyethyl cellulose, carboxypropyl cellulose, or carboxyisopropyl cellulose. In additional embodiments, the cellulose or cellulose derivatives may include cellulose salts, and the cations thereof may be selected from sodium, ammonium, calcium, or lithium. For example, the cellulose or cellulose derivatives may include sodium cellulose or sodium cellulose derivatives selected from sodium cellulose esters, sodium cellulose ethers, sodium cellulose nitrate, or sodium carboxyalkyl cellulose. CMC may include sodium carboxymethyl cellulose. In some embodiments, one or more binders include CMC, PVDF, and/or PTFE.

The binder composition for electrode fabrication of the present invention having the above-described configuration may be used not only as a binder for conventional wet and dry processes, but also as a primer layer composition.

Next, the electrode material layer composition for a dry process of the present invention comprises: a positive or negative electrode active material; the binder composition having the above-described configuration; and a conductive material. As described above, the binder composition may include the ternary copolymer alone or the ternary copolymer in combination with one or more additional binders. In particular, the composition may include 85 to 99.4 wt% of the positive or negative electrode active material, 0.5 to 10 wt% of the binder composition, and 0.1 to 5 wt% of the conductive material.

The positive or negative electrode active material may be any material known in the art that is suitable for use in a positive or negative electrode of a secondary battery. In one embodiment, the active material may include at least one selected from the group consisting of alkali metals such as lithium, alkaline earth metals, manganese, nickel, cobalt, aluminum, iron, tin, graphite, titanium, silicon, silicon oxide, sulfur, and combinations thereof. If the content of the active material is less than 85 wt%, the capacity of the secondary battery is reduced, which is undesirable. If it exceeds 99.4 wt%, the binder content becomes too low, resulting in poor binding among components and poor adhesion to the current collector, thereby deteriorating mechanical properties, which is also undesirable.

If the binder composition content is less than 0.5 wt%, the amount of binder is too small, which may cause problems such as easy detachment of the active material electrode layer from the current collector, and is thus undesirable. If it exceeds 10 wt%, although adhesion to the current collector may be improved, the relative content of the active material decreases, resulting in a reduced capacity per unit volume of the electrode, which is also undesirable.

The conductive material is included to provide electrical conductivity among the components within the electrode layer and between the electrode layer and the metal current collector, and carbon-based nanomaterials may be used. In one embodiment, at least one or more nanomaterials selected from conductive carbon black, graphene, carbon nanotubes (e.g., single-walled, double-walled, multi-walled, branched), carbon nanoribbons, and carbon nanoplates may be used alone or in combination. In general, it is preferable to use a combination of carbon nanotubes having a high aspect ratio and nanocarbon materials having an aspect ratio of less than 100 (e.g., conductive carbon black).

If the content of the conductive material is less than 0.1 wt%, electrical conductivity decreases, which is undesirable. If it exceeds 5 wt%, the relative content of the active material decreases, resulting in reduced capacity of the secondary battery manufactured therefrom, which is also undesirable.

If necessary, the electrode material layer composition for a dry process of the present invention may further comprise an acrylate-based compound and a curing agent therefor.

In the dry process, an electrode material layer is formed by first dry-mixing the respective components and then applying pressure and heat to form a thin film-type electrode layer. In preparing the electrode material layer composition by mixing the active material, the binder composition, and the conductive material, the inclusion of an acrylate-based compound that is liquid at room temperature but can be cured into a solid phase by an appropriate method, together with a curing agent therefor, allows the acrylate-based compound to function as a liquid processing aid during mixing. This facilitates the formation of a thinner and more uniform active material sheet and improves the surface appearance of the resulting electrode layer, which is advantageous for manufacturing an electrode plate for a secondary battery.

Herein, the acrylate-based compound is not particularly limited as long as it is liquid at room temperature and can be solidified through a separate treatment process, i.e., a curing process. When an appropriate curing agent is added to an acrylate-based compound that is liquid at room temperature and the mixture is cured under suitable conditions, it is converted into a solid polymer having a three-dimensional network structure. Accordingly, the acrylate compound is not dissolved into the electrolyte, thereby preventing adverse effects on battery performance. Furthermore, when an acrylate-based compound having appropriate functional groups is used, it forms a three-dimensional network structure after curing, which improves adhesion to a metal current collector, thereby providing additional advantages. Although the embodiments are primarily described using acrylate-based compounds (acrylates), it will be apparent that methacrylate-based compounds having similar properties are also included. Therefore, the acrylate-based compounds used in the present invention should be understood to include acrylates, methacrylates, and other analogous compounds having similar substituents.

The acrylate-based compound is not particularly limited as long as it includes at least two or more functional groups. The functional groups are not particularly limited as long as they can react under heat or light, and may include at least one selected from the group consisting of methylene, urethane, ester, ether, oxide, ethylene oxide, propylene oxide, ethylene glycol, propylene glycol, butadiene, imide, amine, amide, epoxy, olefin, sulfone groups, and combinations thereof. In particular, the acrylate-based compound may include 2 to 16 functional groups. If the number of functional groups is less than 2, the compound effectively behaves as a monofunctional acrylate, resulting in a slow curing reaction due to insufficient crosslinking points, which is undesirable. If the number exceeds 16, the curing reaction may proceed too rapidly, making it difficult to control the reaction rate and potentially resulting in an excessively rigid polymer within a short time, which is also undesirable.

Further, unless otherwise specified, the acrylate-based compound used in the present invention encompasses all forms of acrylate compounds, including monomers and oligomers. In one embodiment, it may be a monomer or oligomer having a main chain composed of 2 to 1,000 carbon atoms. If the number of carbon atoms in the main chain is less than 2, the resulting polymer becomes excessively brittle upon post-curing and is unsuitable as a binder. If it exceeds 1,000, steric hindrance may occur, which may adversely affect its function as a binder. Since a key technical feature of the present invention is the use of an acrylate-based compound that is liquid at room temperature and can be post-cured through a separate treatment, the above-described functional groups are merely illustrative and are not limiting.

Examples of the acrylate-based compound include various aliphatic and aromatic acrylate monomers such as triethylene glycol acrylate, trimethylolpropane triacrylate, dipentaerythritol hexaacrylate, trimethylolpropane trimethacrylate, and bisphenol A ethylene oxide dimethacrylate, as well as oligomers composed of two or more repeating units of monomers forming the main chain of such acrylates. These may include at least one selected from functional groups such as methylene, urethane, ester, ether, oxide, ethylene oxide, propylene oxide, ethylene glycol, propylene glycol, butadiene, imide, amine, amide, epoxy, olefin, and sulfone groups.

The acrylate-based compound may be included in an amount of 0.1 to 10 parts by weight based on 100 parts by weight of the positive or negative electrode active material. If the content is less than 0.1 parts by weight, the effect of the acrylate compound is insignificant. If it exceeds 10 parts by weight, the content of the acrylate compound becomes excessively high, resulting in a decrease in capacity per unit volume, which is undesirable.

The curing agent for the acrylate-based compound is a component for converting the acrylate-based compound, which is liquid at room temperature, into a solid polymer having a three-dimensional network structure through a curing process after mixing. One or more of a thermal curing agent and a photo-curing agent may be used. In particular, when photo-curing alone is insufficient-such as in the case of a thick electrode layer-it may be more effective to use both a photo-curing agent (photoinitiator) and a thermal curing agent in combination. Any curing agent capable of generating radicals upon heat or light may be used without limitation.

More specifically, the thermal curing agent (thermal initiator) is not particularly limited as long as it includes a peroxide or an azo compound that decomposes at 50°C to 180°C to generate radicals. In one embodiment, examples of peroxide initiators include benzoyl peroxide (BP), which generates oxygen radicals, and examples of azo initiators include 2,2'-azobisisobutyronitrile (AIBN). If the decomposition temperature is lower than 50°C, radicals may be generated too easily, which is undesirable. If it exceeds 180°C, the curing temperature becomes too high, which is disadvantageous in terms of cost. Preferably, a curing agent that decomposes at 50°C to 150°C is used.

The photo-curing agent (photoinitiator) may include phenyl ketone-based compounds or phosphine oxide-based compounds that generate radicals upon irradiation with light such as UV. In one embodiment, examples include hydroxycyclohexyl phenyl ketone, hydroxy dimethyl acetophenone, trimethylbenzoyl diphenyl phosphine oxide, and methyl benzoylformate, which may be used in solid or liquid form.

The curing agent may be included in an amount of 0.1 to 20 parts by weight based on 100 parts by weight of the acrylate-based compound. If the content is less than 0.1 parts by weight, the acrylate compound may remain uncured and thus remain in a liquid state even after the curing process, which is undesirable. If it exceeds 20 parts by weight, over-curing may occur, resulting in excessive rigidity, or radicals generated from unreacted curing agents may cause side reactions and degrade other binders present in the composition.

Meanwhile, the binder composition for electrode fabrication comprising the ternary copolymer of the present invention may be used not only in the above-described dry process but also as a binder for a conventional wet process. For example, the ethylene glycol-maleic acid-acrylonitrile copolymer of the present invention may be dissolved in a solvent such as N-methyl-2-pyrrolidone (NMP), followed by adding and dispersing an NCM-based positive electrode active material and a conductive material such as conductive carbon black or carbon nanotubes to prepare an electrode composition slurry. The slurry may then be coated onto a metal current collector and dried to prepare a positive electrode plate. It is also apparent that, in the case of an all-solid-state battery, an electrode composition may be prepared using the ternary copolymer of the present invention as a binder together with an active material and other components, and an electrode may be manufactured therefrom.

Next, the primer layer composition of the present invention comprises a ternary copolymer and a nanocarbon material. The nanocarbon material is used to impart electrical conductivity to the primer layer and is not particularly limited as long as it is a nanoscale carbon material. In one embodiment, the nanocarbon material may include at least one selected from the group consisting of conductive carbon black, carbon nanotubes (single-walled, double-walled, and multi-walled), graphene, carbon nanoplatelets (CNP), and carbon nanoribbons, or a mixture thereof.

The content of the nanocarbon material may be in the range of 0.05 to 300 parts by weight based on 100 parts by weight of the ternary copolymer. If the content of the nanocarbon material is less than 0.05 parts by weight, the amount of conductivity-enhancing agent is too low, resulting in insufficient electrical conductivity, which is disadvantageous. If it exceeds 300 parts by weight, the viscosity of the primer composition becomes excessively high, resulting in poor coatability, which is also disadvantageous. The solvent used for preparing the primer composition is not particularly limited and may include any organic solvent or aqueous solvent.

The primer composition may be prepared by dispersing the ternary copolymer and the nanocarbon material in a solvent such as N-methyl-2-pyrrolidone (NMP) or water using a high-pressure and high-speed dispersion process. The solid content of the primer composition may be in the range of 0.2 to 40 wt% based on the total weight of the composition. If the solid content is less than 0.2 wt%, an excessively large wet thickness is required to obtain a primer layer of a desired thickness, which is disadvantageous. If it exceeds 40 wt%, the viscosity becomes too high, making it difficult to form a thin primer layer, which is also disadvantageous.

As described below, the thickness of the primer layer formed on the surface of a metal current collector may be in the range of 0.05 to 5 µm. When a primer layer having a thickness of 1.0 µm is formed on a polyester film, the surface resistance is preferably 10⁷ ohms/sq or less, in order to facilitate electron transport through the primer layer. If the surface resistance exceeds 10⁷ ohms/sq, electron transport may be hindered, which may result in deterioration of cell performance.

As such, when an electrode composition sheet prepared by a dry process is attached to a metal current collector to form an electrode plate, it is advantageous to form a primer layer on the surface of the metal current collector prior to attachment of the electrode material layer. Since the primer layer is required to have high electrical conductivity, the primer composition is prepared by using the ternary copolymer of the present invention as a binder and mixing it with a nanocarbon material. The use of a primer composition comprising the same ternary copolymer as that included in the electrode material layer is advantageous because it maximizes adhesion between the primer layer and the electrode material layer.

Next, the electrode for a secondary battery according to the present invention comprises a positive electrode material layer or a negative electrode material layer formed from the electrode material layer composition for a dry process described above. The thickness of the positive or negative electrode material layer is less than 100 µm. In particular, when the electrode material layer composition for a dry process further comprises an acrylate-based compound, an electrode film having a thinner thickness and improved properties may be prepared.

As described below, when the electrode for a secondary battery of the present invention is manufactured by a dry process, a metal current collector on which a primer layer has been formed (aluminum for a positive electrode and copper for a negative electrode) is used when attaching the sheet prepared from the electrode material layer composition. In contrast, in a wet process, the adhesion of the electrode layer is sufficiently high even without a primer layer, and thus the electrode layer may be formed directly on a non-primed metal current collector.

Next, the method for manufacturing an electrode for a secondary battery according to the present invention may comprise: a composition preparation step of preparing the electrode material layer composition for a dry process described above; a sheet formation step of forming a positive electrode material layer sheet or a negative electrode material layer sheet from the electrode material layer composition; an attachment step of attaching the positive or negative electrode material layer sheet onto a metal current collector; a curing step of curing the attached electrode material layer sheet; and a rolling step of rolling the electrode obtained after the curing step. Each of the above steps may be performed in a batch process or through a continuous process to manufacture a final electrode plate, and a continuous process is generally more efficient.

In the composition preparation step, any known mixing method may be used as long as it allows dry mixing of all components, i.e., the positive or negative electrode active material, the binder composition for electrode fabrication, and a conductive additive, under shear force. If necessary, a liquid acrylate-based compound and a curing agent therefor may be further added. Various mixing methods may be employed, including a mixer equipped with blades such as a Henschel mixer (low-speed or high-speed), or a continuous mixing apparatus such as an extruder. Representative examples include a single-screw extruder, a twin-screw extruder, and a continuous kneader.

The sheet formation step may be performed by forming the mixture into a sheet of a predetermined thickness using a die at the end of the continuous mixing apparatus, followed by rolling the sheet multiple times to obtain a desired thickness. In the Examples and Comparative Examples described below, a calendering method using two rolls spaced at a predetermined distance was employed.

The attachment step may comprise forming a primer layer on the metal current collector and placing and pressing the positive or negative electrode material layer sheet onto the primer layer. In a continuous process, this step may be performed on a metal current collector supplied through a separate feeding system. The primer layer may be formed by coating the above-described primer composition to a thickness of 0.05 to 5 µm. If the thickness is less than 0.05 µm, coating becomes difficult and the adhesion improvement effect is insignificant. If it exceeds 5 µm, the conductive layer becomes excessively thick, which may hinder lithium-ion transport.

The curing step is performed to solidify the acrylate compound into a binder by curing the electrode material layer sheet attached to the metal current collector, and to enhance adhesion to the metal current collector. The curing may be performed by thermal curing at 50°C to 150°C for 5 to 30 minutes and/or by photo-curing through UV irradiation.

The rolling step may be performed to increase electrode density by applying an appropriate pressure to the electrode material layer obtained after the curing step.

### Example 1

A binder composition for electrode fabrication (Binder Composition 1) was prepared by synthesizing an ethylene glycol-maleic acid-acrylic acid copolymer, which is a ternary copolymer, via a one-step or two-step synthesis as follows.

### (1) One-step synthesis

Ethylene glycol (4,000 g/mol) and maleic acid (116 g/mol) were weighed at a molar ratio of 1:1 and dissolved in dimethylformamide (DMF). Acrylic acid was then added such that the weight ratio of acrylic acid to the total weight of ethylene glycol and maleic acid was 1:1. The mixture was adjusted to have a solid content of 5 wt% and stirred at 70°C for 10 minutes. While maintaining this temperature, 1.5 wt% of ammonium persulfate (APS), based on the total solids, was slowly added dropwise, and the reaction was allowed to proceed for 5 hours. After completion of the reaction, ethanol was added to precipitate the product, followed by filtration, purification, and vacuum drying (40°C, 24 hours) to obtain the ternary copolymer.

### (2) Two-step synthesis

Ethylene glycol (4,000 g/mol) and maleic acid (116 g/mol) were weighed at a molar ratio of 1:1 and dissolved in DMF to a solid content of 5 wt%, followed by stirring at 90°C for 10 minutes. Then, 1.5 wt% of p-toluenesulfonic acid (initiator) was slowly added dropwise, and the reaction was continued for at least 6 hours until the solution turned white, thereby forming an ethylene glycol-maleic acid complex. The reaction mixture was slowly poured into ether to precipitate the product, which was then filtered and vacuum-dried (50°C, 24 hours).

The obtained ethylene glycol-maleic acid complex and acrylic acid were mixed at a weight ratio of 1:1 in water and heated to 70°C with stirring. Ammonium persulfate (1.5 wt% based on total solids) was added dropwise, and the reaction was carried out for 10 hours to synthesize the ethylene glycol-maleic acid-acrylic acid ternary copolymer. The product was filtered under pressure and vacuum-dried (40°C, 24 hours).

### Example 2

A binder composition for electrode fabrication (Binder Composition 2) was prepared by synthesizing an ethylene glycol-maleic acid-acrylonitrile copolymer via the same one-step method as follows.

The one step synthesis process of Example 1 was carried out in the same manner as in Example 1, except that acrylonitrile (53 g/mol) was used instead of acrylic acid, and an ethylene glycol-maleic acid-acrylonitrile copolymer was obtained.

### Example 3

Binder composition 3 for electrode fabrication was prepared by further including PTFE as a different type of binder in the ethylene glycol-maleic acid-acrylonitrile copolymer synthesized in Example 2 as follows.

Binder Composition 3 was prepared by uniformly mixing the ethylene glycol-maleic acid-acrylonitrile copolymer with polytetrafluoroethylene (PTFE) at a weight ratio of 3:1.

### Example 4

Binder Composition 4 was prepared in the same manner as Example 3, except that the weight ratio of the copolymer to PTFE was 1:1.

### Example 5

Using Binder Composition 2, a positive electrode slurry, a positive electrode, and a coin cell were prepared via a wet process as follows.

### (1) Preparation of positive electrode slurry

2.0 wt% of Binder Composition 2, 96.0 wt% of active material (NCM811), and 2.0 wt% of conductive carbon black were added to NMP (solid content: 70 wt%) and mixed in a C-mixer at 2,000 rpm for 20 minutes.

### (2) Preparation of positive electrode

The positive electrode slurry was coated onto an aluminum foil and dried to form a positive electrode plate having an electrode layer with a thickness of 40 µm (loading level: 10 mg/cm²)

### (3) Preparation of coin cell

A CR2032 coin cell (half-cell configuration) was assembled using the positive electrode. Lithium metal foil was used as a counter electrode. The electrolyte was prepared by dissolving 1.15 M LiPF₆ in a mixed carbonate solvent (EC/PC/DEC/VC/FEC = 2/1/7/0.05/0.05 by weight). The cell was assembled in an argon-filled glove box.

### Example 6

Using Binder Composition 1 (two-step synthesis), a negative electrode slurry, a negative electrode, and a coin cell were prepared via a wet process.

### (1) Preparation of negative electrode slurry

2.7 wt% of Binder Composition 1, 96.3 wt% of mixed active material (graphite/SiOx = 90/10 wt%, theoretical capacity ~470 mAh/g), 1.0 wt% carbon black, and 0.3 wt% single-walled carbon nanotubes were dispersed in a DMF/water mixed solvent (8:2 by weight, solid content: 70 wt%). The mixture was pre-mixed and then further mixed in a C-mixer at 2,000 rpm for 10 minutes.

### (2) Preparation of negative electrode

The slurry was coated onto copper foil and dried to form an electrode layer having a thickness of 20 µm.

### (3) Preparation of coin cell

A CR2032-type cell for charge-discharge cycling was prepared using the negative electrode and the same electrolyte as in Example 5.

### Example 7

Using Binder Composition 2, a dry-process electrode material layer composition 1, a positive electrode 1, and a coin cell were prepared as follows.

### (1) Preparation of a dry-process electrode material layer composition

3.5 wt% Binder Composition 2, 95 wt% NCM811, and 1.5 wt% carbon black were kneaded at 120°C for 20 minutes at 40 rpm using a kneader.

### (2) Preparation of positive electrode

The dry-process electrode material layer composition was rolled at room temperature to form an 80 µm-thick sheet, which was then pressed (8 kgf/cm²) onto a primer-coated current collector.

### (3) Coin cell preparation

A CR2032 coin cell (half-cell configuration) was assembled using the positive electrode. The remaining composition is the same as Example 5.

### Example 8

Using Binder Composition 1 synthesized by a two-step method, a dry-process negative electrode material layer composition 1, a negative electrode 1, and a coin cell were prepared as follows.

### (1) Preparation of dry-process negative electrode material layer composition

3.5 wt% of Binder Composition 1, 95.0 wt% of a mixed active material (graphite/SiOx = 90/10 wt%, theoretical capacity: 470 mAh/g), 1.0 wt% of carbon black, and 0.5 wt% of single-walled carbon nanotubes were kneaded in the same manner as in Example 7 to prepare a dry-process negative electrode material layer composition.

### (2) Preparation of negative electrode

The prepared dry-process negative electrode material layer composition was subjected to a rolling process at room temperature to prepare a negative electrode layer sheet having a thickness of 80 µm, and then the sheet was attached to a copper foil on which a primer layer had been formed, thereby manufacturing a negative electrode plate having a thickness of about 65 µm.

### (3) Preparation of coin cell

A charge-discharge cycle test cell (2032 type) was manufactured using the negative electrode plate. The electrolyte used was the same as that of Example 5.

### Example 9

### (1) Preparation of dry-process electrode material layer composition

1.5 wt% of Binder Composition 2, 2 wt% of an acrylate-based compound (a mixture of an ethylene glycol-based bifunctional monomer and a hexafunctional ethylene glycol-based oligomer at a weight ratio of 1:1), 2 parts by weight of AIBN (thermal curing agent) and 5 parts by weight of a phosphine oxide-based curing agent (photocuring agent) based on the weight of the acrylate compound, 95 wt% of a positive electrode active material (NCM811), and 1.5 wt% of conductive carbon black were mixed and kneaded using a kneader at 120°C for 20 minutes at a speed of 40 rpm to prepare a dry-process positive electrode material layer composition 2.

### (2) Formation of positive electrode material layer sheet

The positive electrode material layer composition 2 was rolled several times under a pressure of 7 kgf/cm² to form a positive electrode material layer sheet having a thickness of 70 µm.

### (3) Attachment step

### ① Formation of primer layer

In order to attach the positive electrode material layer sheet onto an aluminum current collector, a primer layer was formed on the surface of the current collector as follows. A primer for a positive electrode was prepared by adding carbon nanotubes together with an ethylene glycol-maleic anhydride-acrylonitrile copolymer (CNP Solutions, Korea) into NMP, stirring at room temperature for 10 minutes, and then dispersing the mixture by a high-pressure spraying method to prepare a primer layer composition. The content of carbon nanotubes in the binder was 20 wt% based on the total weight of the copolymer, and the solid content in the dispersion was 4 wt%. The primer layer was formed to a thickness of about 1.0 µm on an aluminum foil (thickness: 12 µm) using a bar coater (drying: 130°C, 2 minutes). As a result of a tape test for the primer layer, it was confirmed that the primer layer was not peeled off from the current collector and was well adhered. In addition, the surface resistance of the current collector on which the primer layer was formed was 400 ohm/area.

### ② Pressing step

The positive electrode material layer sheet was placed on the aluminum current collector on which the primer layer had been formed and pressed to form a temporary positive electrode.

### (4) Curing step

The temporary positive electrode was treated at 120°C for 10 minutes and then irradiated with UV light (700 mJ/cm²), whereby the ethylene glycol-based bifunctional monomer and hexafunctional ethylene glycol-based oligomer, which are acrylate-based compounds, were cured so that the acrylate compound used as a binder does not dissolve in the electrolyte and functions as a binder.

### (5) Rolling step

The positive electrode material layer composition 2 subjected to the curing step was finally roll-pressed to achieve an electrode density of 1.0 g/cm³, thereby manufacturing a positive electrode 2 for a secondary battery including a positive electrode material layer sheet having a thickness of 70 µm.

### Example 10

A positive electrode 3 for a secondary battery was prepared in the same manner as in Example 9, except that, in preparing the dry-process electrode material layer composition, 2 wt% of Binder Composition 2, 1.5 wt% of the acrylate-based compound (a mixture of an ethylene glycol-based bifunctional monomer and a hexafunctional ethylene glycol-based oligomer at a weight ratio of 1:1), and 2 parts by weight of AIBN (thermal curing agent) and 5 parts by weight of a phosphine oxide-based curing agent (photocuring agent) based on the weight of the acrylate compound were used.

### Example 11

A positive electrode 4 for a secondary battery was prepared in the same manner as in Example 7, except that Binder Composition 3 was used.

### Example 12

A positive electrode 5 for a secondary battery was prepared in the same manner as in Example 7, except that Binder Composition 4 was used.

### Example 13

A positive electrode 6 for a secondary battery was prepared in the same manner as in Example 10, except that Binder Composition 3 was used.

### Comparative Example 1

A comparative positive electrode 1 was obtained in the same manner as in Example 7, except that a current collector not coated with a primer layer was used.

### Comparative Example 2

A comparative positive electrode 2 was obtained in the same manner as in Example 7, except that polytetrafluoroethylene (PTFE) was used instead of Binder Composition 2. In this case, in order to form an electrode layer having a thickness of 90-100 µm or less, a high pressure of about 15-20 ton/cm² was required.

### Experimental Example 1

It was confirmed whether the same material was synthesized by analyzing the ternary copolymer, ethylene glycol-maleic acid-acrylic acid, synthesized in one step or two steps in Example 1, using Fourier transform infrared spectroscopy (FTIR).

Both the ethylene glycol-maleic acid-acrylic acid synthesized by the one-step method and the two-step method were white particles, and it was confirmed that the ternary copolymer was successfully synthesized by confirming the presence of the ketone peak of acrylic acid using FTIR.

As a result of molecular weight measurement by chromatography, the number average molecular weight of the ternary copolymer synthesized by the one-step method was 22,500 g/mol, and that of the ternary copolymer synthesized by the two-step method was measured to be 25,000 g/mol.

As described above, since the infrared spectra of the ternary copolymers synthesized by the one-step and two-step methods were very similar to each other, it was confirmed that both synthesis methods produce the same copolymer.

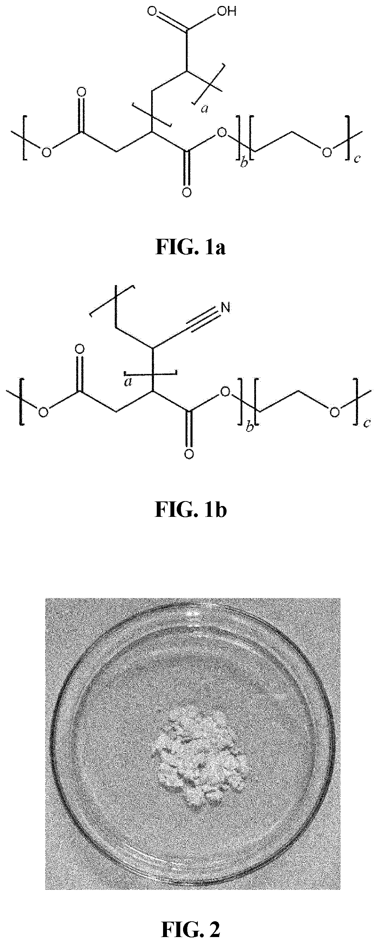

In addition, the ternary copolymer synthesized in Example 2, i.e., ethylene glycol-maleic acid-acrylonitrile copolymer, was observed to be ivory-colored particles as shown in FIG. 2, and it was confirmed by FTIR analysis that the ternary copolymerization was successfully carried out by confirming the presence of the acrylonitrile peak. The number average molecular weight measured by chromatography was 31,600 g/mol.

### Experimental Example 2

In order to confirm whether the electrode material layer was well adhered to the metal current collector, an adhesion test using Scotch tape was performed on the positive and negative electrodes prepared by a wet process, the positive electrodes 1 to 6 for secondary batteries and the negative electrode prepared by a dry process, and the comparative positive electrodes 1 and 2. For this purpose, 3M Scotch tape was attached to the surface of the electrode material layer and then peeled off, and the degree of adhesion was determined based on whether the electrode material layer was peeled from the current collector. That is, if the electrode layer was peeled off from the current collector when the tape was removed after attachment to the electrode surface, the adhesion was determined to be poor.

As a result of the adhesion test using Scotch tape, it was confirmed that the electrode material layers of the positive and negative electrodes prepared by the wet process, as well as the positive electrodes 1 to 6 for secondary batteries and the negative electrode prepared by the dry process and the comparative positive electrode 2, were all well adhered to the current collectors.

However, in the case of comparative positive electrode 1, when an electrode composition sheet was formed using a current collector without a primer layer, it was confirmed from the tape test that the entire electrode composition layer was peeled off. Accordingly, since the electrode composition layer was entirely detached from the current collector, further cell testing was considered meaningless, and thus no cell test was conducted for comparative positive electrode 1.

In addition, among the positive electrodes 1 to 6 for secondary batteries prepared by the dry process, the positive electrodes 2, 3, and 6 prepared using an electrode material layer composition including an acrylate compound and a curing agent thereof exhibited a much cleaner surface appearance, and it was confirmed that a thinner electrode layer sheet could be achieved when the acrylate compound and the curing agent were used.

In particular, the positive electrodes 2, 3, and 6 exhibited excellent processability of the positive electrode material layer sheet, which is presumed to be because the acrylate compound exists in a liquid state at room temperature, thereby facilitating the kneading and rolling processes of the active material composition composed mostly of inorganic particles. Accordingly, when the acrylate compound and the curing agent are included in the electrode material layer composition of the present invention, it can function as a processing aid for a dry process or as a mixed binder while further improving the performance of the lithium-ion battery.

In the preparation of positive electrodes 4 and 5 in Examples 11 and 12, respectively, the electrode layers were formed with a clean appearance during rolling, and the pressure required to attach the electrode layer onto the current collector was lower than that required in Comparative Example 2, i.e., when PTFE alone was used. Thus, it was easier to manufacture the electrode plate than when PTFE alone was used. From this, it can be confirmed that the ternary copolymer of the present invention can be used in combination with PTFE, which is a conventional binder, without significant issues.

### Experimental Example 3

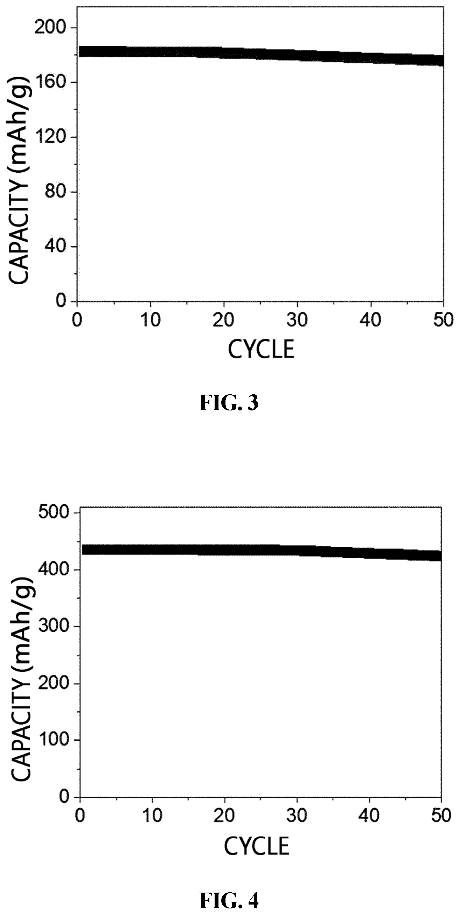

Based on the results of Experimental Example 2, charge-discharge cycle tests were performed on the positive and negative electrode plates in which the electrode layers were well adhered to the current collectors. In the charge-discharge cycle test, an initial formation process was carried out while increasing the rate from 0.1 to 1.0 C, and thereafter, a life test was performed at 0.2 C or 1.0 C. For all positive and negative electrodes prepared by the wet or dry process, the discharge capacity after 3 or 4 cycles was set as the initial capacity, and the capacity retention was calculated by comparing the initial capacity with the discharge capacity after 50 cycles. The results are shown in FIGS. 3 to 8.

First, as a result of the charge-discharge cycle test of the coin cell prepared using the positive electrode manufactured by the wet process in Example 5, as shown in FIG. 3, the discharge capacity was 182 mAh/g after 4 cycles and 176 mAh/g after 50 cycles, indicating almost no decrease in capacity (capacity retention: ~97%).

In addition, for the coin cell prepared using the negative electrode manufactured by the wet process in Example 6, after the initial formation process, the cycle test was conducted at a rate of 0.5 C. As shown in FIG. 4, the discharge capacity after 3 cycles was 435 mAh/g, and the discharge capacity after 50 cycles was 420 mAh/g, with a capacity retention of about 97%.

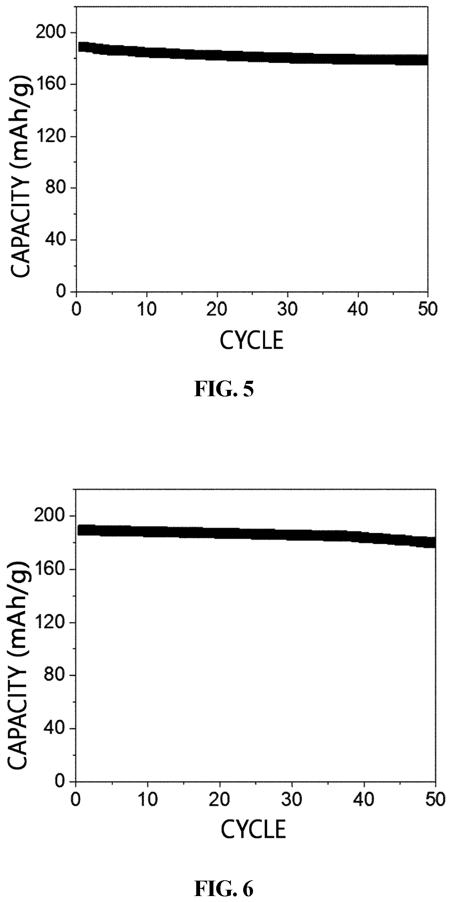

For the coin cell prepared using positive electrode 1 manufactured by the dry process in Example 7, as shown in FIG. 5, the discharge capacity was 189 mAh/g after 4 cycles and 179 mAh/g after 50 cycles, indicating a capacity retention of about 95%.

Although not shown, in the case of the coin cell prepared using the negative electrode manufactured by the dry process in Example 8, the discharge capacity after 4 cycles was 412 mAh/g and after 50 cycles was 395 mAh/g, corresponding to a capacity retention of about 95%.

For the coin cell prepared using positive electrode 2 manufactured by the dry process in Example 9, as shown in FIG. 6, the discharge capacity was 189 mAh/g after 4 cycles and 180 mAh/g after 50 cycles, indicating a capacity retention of about 95%. Although not shown, in the case of the coin cell prepared using positive electrode 3 manufactured by the dry process in Example 10, a capacity retention of about 94% was observed.

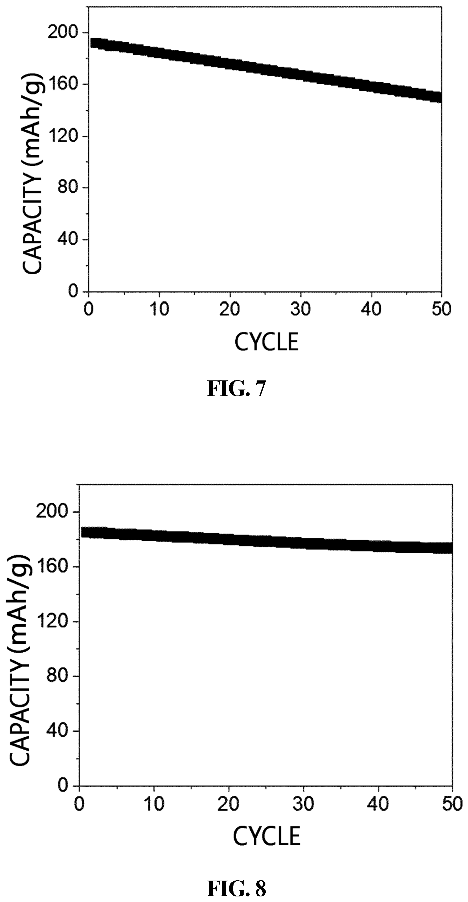

For the coin cell prepared using comparative positive electrode 2 manufactured by the dry process in Comparative Example 2, as shown in FIG. 7, although the discharge capacity after 4 cycles was 192 mAh/g, the discharge capacity after 50 cycles decreased significantly to 150 mAh/g. As such, in the case of PTFE, which is a conventional binder, a significantly high pressure is required to form the electrode layer, and it was observed that the cell capacity continuously decreased as the charge-discharge cycles progressed.

For the coin cell (2032 type) prepared using positive electrode 4 manufactured by the dry process in Example 11, as shown in FIG. 8, the initial capacity was about 185 mAh/g or more, and the capacity retention after 50 cycles was about 94%. Although not shown, for the coin cell prepared using positive electrode 5 manufactured in Example 12, similar to Example 11, the initial capacity was about 185 mAh/g or more, and the capacity retention after 50 cycles was about 95%.

Although not shown, in the case of the coin cell prepared using positive electrode 6 manufactured by the dry process in Example 13, the discharge capacity after 4 cycles was 190 mAh/g, and the capacity retention after 50 cycles was 94%. From this, it can be confirmed that even in the case of a mixed binder, the acrylate compound is effective in preparing the active material composition sheet.

From the above experimental results, it was confirmed that the binder composition including the glycol-maleic acid-based ternary copolymer of the present invention can be used not only as a binder for electrode fabrication in a dry process but also in a wet process and in a primer layer composition, and can also be used in combination with other conventional binders.

Furthermore, the binder composition for electrode fabrication comprising the terpolymer of the present invention exhibits excellent dry processability, thereby enabling the fabrication of electrodes having a relatively thin thickness (less than 100 µm), and the electrodes prepared therefrom also exhibit excellent electrochemical properties.

In particular, when an acrylate-based compound and a curing agent for the acrylate-based compound are used together in the dry-process electrode material layer composition comprising the binder composition for electrode fabrication, uniform mixing of the electrode material layer composition containing a positive electrode active material or a negative electrode active material can be achieved because the acrylate-based compound exists in a liquid state at room temperature. In addition, the processability of the electrode sheet formed from the electrode material layer composition, i.e., a positive electrode material layer sheet or a negative electrode material layer sheet, is also excellent, such that an electrode material layer composition sheet having a relatively thin thickness of less than 100 µm can be produced even under a relatively low pressure of less than 10 kgf/cm². Furthermore, after undergoing a curing step, the adhesion between the electrode material layer sheet and the metal current collector is excellent, and a high-capacity retention can be maintained during charge-discharge cycle testing.

As described above, the electrode material layer composition comprising the binder composition for electrode fabrication according to the present invention can be used to form a positive electrode material layer and a negative electrode material layer, and can be widely applied to various types of secondary batteries, including lithium-ion batteries using active materials.

Although the present invention has been illustrated and described with the preferred embodiments as discussed hereinabove, the present invention is not limited to the aforementioned embodiments, and various changes and modifications can be made by those skilled in the art to which the present invention pertains, without departing from the spirit of the present disclosure.

## Claims

1. A binder composition for electrode fabrication, comprising:
a terpolymer composed of a glycol-based compound, a maleic acid-based compound, and a third monomer.

2. The binder composition for electrode fabrication according to claim 1,
wherein the third monomer is a compound having a main chain including a vinyl group (CH₂=CH-) to which another functional group is attached.

3. The binder composition for electrode fabrication according to claim 2,
wherein the compound is at least one selected from the group consisting of an acrylic-based compound, an acrylonitrile-based compound, an ethylene-based compound, an imidazole-based compound, an imidazolium-based compound, a propylene-based compound, and a vinylidene-based compound.

4. The binder composition for electrode fabrication according to claim 1,
wherein the third monomer is an acrylic-based compound represented by the following Chemical Formula 1:
[Chemical Formula 1] CH₂=CH-COO-R
wherein R is one selected from -H, an alkyl group, an alkenyl group, an alkynyl group, a phenyl group, and an amino group.

5. The binder composition for electrode fabrication according to claim 2,
wherein the terpolymer comprises the glycol-based compound and the maleic acid-based compound in a molar ratio of 99:1 to 1:99, and the glycol-based compound and the maleic acid-based compound relative to the third monomer are included at a weight ratio of 99:1 to 1:99.

6. The binder composition for electrode fabrication according to claim 1,
wherein the glycol-based compound is a compound having a main chain composed of ethylene glycol (HO-(CH₂-CH₂-O)ₙ-H) or ethylene oxide (-(CH₂-CH₂-O)ₙ-), wherein n is a natural number greater than 0, and
the maleic acid-based compound is a compound including a five-membered ring structure having two carboxyl groups.

7. The binder composition for electrode fabrication according to claim 6,
wherein the glycol-based compound is at least one selected from the group consisting of ethylene glycol, ethylene oxide, propylene glycol, and propylene oxide, and
the maleic acid-based compound is at least one selected from the group consisting of maleic acid, salts thereof, and anhydrides thereof.

8. The binder composition for electrode fabrication according to claim 1,
wherein the terpolymer is ethylene glycol-maleic acid-acrylonitrile or ethylene glycol-maleic acid-acrylic acid.

9. The binder composition for electrode fabrication according to claim 1,
wherein the terpolymer has a number-average molecular weight of 10,000 to 1,000,000 g/mol.

10. The binder composition for electrode fabrication according to claim 1,
further comprising one or more additional binders, wherein the terpolymer and the binder are included in a weight ratio of 90:10 to 10:90.

11. The binder composition for electrode fabrication according to claim 10,
wherein the binder is at least one selected from the group consisting of carboxymethyl cellulose (CMC), polyvinylidene fluoride (PVDF), polytetrafluoroethylene (PTFE), and polyacrylic acid (PAA).

12. A dry-process electrode material layer composition, comprising:
a positive electrode active material or a negative electrode active material;
the binder composition according to any one of claims 1 to 11; and
a conductive material.

13. The dry-process electrode material layer composition according to claim 12, comprising 85 to 99.4 wt% of the positive or negative electrode active material, 0.5 to 10 wt% of the binder composition, and 0.1 to 5 wt% of the conductive material.

14. The dry-process electrode material layer composition according to claim 12,
wherein the conductive material is at least one selected from the group consisting of conductive carbon black, graphene, single-walled carbon nanotubes, double-walled carbon nanotubes, multi-walled carbon nanotubes, branched carbon nanotubes, carbon nanoplatelets, and carbon nanoribbons.

15. The dry-process electrode material layer composition according to claim 12, further comprising an acrylate-based compound that is liquid at room temperature and capable of post-curing, and a curing agent for the acrylate-based compound.

16. The dry-process electrode material layer composition according to claim 15,
wherein the acrylate-based compound includes 2 to 16 functional groups and is a monomer or oligomer having a main chain containing 2 to 1,000 carbon atoms.

17. The dry-process electrode material layer composition according to claim 16,
wherein the functional group is at least one selected from the group consisting of methylene, urethane, ester, ether, oxide, ethylene oxide, propylene oxide, ethylene glycol, propylene glycol, butadiene, imide, amine, amide, epoxy, olefin, sulfone, and combinations thereof.

18. The dry-process electrode material layer composition according to claim 15,
wherein the acrylate-based compound is included in an amount of 0.1 to 10 parts by weight based on 100 parts by weight of the positive or negative electrode active material.

19. The dry-process electrode material layer composition according to claim 18,
wherein the curing agent is at least one of a thermal curing agent and a photo-curing agent, and is included in an amount of 0.1 to 20 parts by weight based on 100 parts by weight of the acrylate-based compound.

20. The dry-process electrode material layer composition according to claim 19,
wherein the thermal curing agent includes a peroxide or an azo compound, and the photo-curing agent includes a phenyl ketone-based compound or a phosphine oxide-based compound.

21. The dry-process electrode material layer composition according to claim 12,
wherein the positive or negative electrode active material includes at least one selected from the group consisting of lithium, manganese, nickel, cobalt, aluminum, iron, phosphorus, tin, titanium, carbon materials, silicon, silicon oxide, sulfur, and combinations thereof.

22. A primer layer composition comprising, per 100 parts by weight of the binder composition according to any one of claims 1 to 11, 0.05 to 300 parts by weight of a nanocarbon material and a solvent, wherein a solid content is 0.2 to 40 wt%.

23. The primer layer composition according to claim 22,
wherein the nanocarbon material is at least one selected from the group consisting of conductive carbon black, graphene, single-walled carbon nanotubes, double-walled carbon nanotubes, multi-walled carbon nanotubes, branched carbon nanotubes, carbon nanoplatelets, and carbon nanoribbons.

24. An electrode for a secondary battery,
comprising a positive electrode material layer or a negative electrode material layer formed from the dry-process electrode material layer composition according to claim 12.

25. A method for manufacturing an electrode for a secondary battery, comprising:
preparing the dry-process electrode material layer composition according to claim 15;
forming a positive electrode material layer sheet or a negative electrode material layer sheet from the composition;
attaching the sheet onto a metal current collector;
curing the attached sheet; and
rolling the electrode obtained after the curing step.

26. The method according to claim 25,
wherein the attaching step comprises: forming a primer layer on the metal current collector; and placing and pressing the positive or negative electrode material layer sheet onto the primer layer.

27. The method according to claim 25,
wherein the curing step is performed by at least one of thermal curing at 50°C to 180°C for 5 to 30 minutes or photo-curing by light irradiation.

28. A lithium-ion battery comprising the electrode for a secondary battery according to claim 24.

29. A lithium-ion battery comprising the electrode for a secondary battery manufactured by the method according to claim 25.
